Europäisches Patentamt

European Patent Office

Office européen des brevets

(11) Numéro de publication: **0 269 541 B1**

# FASCICULE DE BREVET EUROPEEN

(45) Date de publication de fascicule du brevet:
**19.06.91**

(51) Int. Cl.⁵: **C21B 7/24**

(21) Numéro de dépôt: 87470020.6

(22) Date de dépôt: **19.10.87**

(54) **Banc de support et d'introduction d'une sonde allongée rectiligne et sonde adaptée.**

(30) Priorité: 29.10.86 FR 8615074

(43) Date de publication de la demande:
**01.06.88 Bulletin 88/22**

(45) Mention de la délivrance du brevet:
**19.06.91 Bulletin 91/25**

(84) Etats contractants désignés:
**AT BE DE ES GB IT LU NL SE**

(56) Documents cités:
FR-A- 679 959
GB-A- 2 181 219

PATENT ABSTRACTS OF JAPAN, vol. 7, no.
97 (C-163)[1242], 23 avril 1983; & JP-A-58 22
312

SOVIET INVENTIONS ILLUSTRATED, semaine
C44, 10 décembre 1980, Derwent Publications Ltd., Londres, GB

SOVIET INVENTIONS ILLUSTRATED, semaine
C41, 19 novembre 1980, Derwent Publications Ltd., Londres, GB

PATENT ABSTRACTS OF JAPAN, vol. 8, no.

218 (C-245)[1655], 4 octobre 1984; & JP-A-59
104 408

(73) Titulaire: **INSTITUT DE RECHERCHES DE LA
SIDERURGIE FRANCAISE (IRSID)
Voie Romaine B.P. 64
F-57210 Maizières-lès-Metz(FR)**

(72) Inventeur: **Daverio, Jean-Claude
7, rue Henry de Jeslin
F-57050 Ban Saint-Martin(FR)**
Inventeur: **Rocchi, Dominique
52, rue de Lorraine
F-54490 Piennes(FR)**

(74) Mandataire: **Ventavoli, Roger et al
IRSID B.P. 64 Voie Romaine
F-57210 Maizières-lès-Metz(FR)**

## Description

La présente invention concerne un banc de support et d'introduction d'une sonde allongée rectiligne, utilisé notamment pour effectuer des sondages dans des fours de fusion réduction tel que les hauts fourneaux sidérurgiques. L'invention concerne également une sonde adaptée à sa mise en oeuvre avec ledit banc.

On connaît des bancs de ce type utilisés dans des ensembles de sondage par un orifice ménagé dans la paroi d'un four. De tels ensembles de sondage comportent généralement un dispositif de guidage et/ou d'étanchéité de la sonde lié à la paroi du four et un dispositif d'introduction de ladite sonde. Couramment, la sonde est introduite dans le four par une poussée que l'on exerce au niveau de son extrémité arrière.

Dans certains cas les sondes utilisées peuvent être de grande longueur, pour un faible diamètre (par exemple 13 m de long pour 90 mm de diamètre), et il est nécessaire de les soutenir entre le dispositif de guidage proche du four et le dispositif d'introduction, pour qu'elles ne fléchissent point. A cet effet on dispose sensiblement dans l'axe de l'orifice d'introduction réalisé dans la paroi du four, un banc de longueur adapté à la longueur des sondes et muni de moyens d'entraînement en translation de la sonde suivant son axe et de moyens de support et de guidage répartis sur la longueur dudit banc.

Un banc de ce type est décrit dans le document FR-2 472 018. Selon ce document, le banc est composé d'un cadre formant deux rails parallèles de guidage d'un chariot porte-sonde maintenant l'extrémité arrière de ladite sonde et destiné à l'entraîner en translation et à lui transmettre l'effort nécessaire à la pénétration dans le four. Le chariot est lui-même mû par des chaînes reliées à un organe moteur et comporte des galets de roulements qui s'engagent à l'intérieur des rails de guidage à section en U. Des bras de support et de guidage destinés à empêcher ou à limiter le cintrage et le flambement de la sonde sont fixés à intervalles réguliers sur le banc et leurs extrémités, situées au dessus de la sonde, comportent des pinces de guidage qui enserrent la sonde. Ces pinces comprennent une partie fixe par rapport au bras et une seconde partie articulée sur celui-ci qui pivote vers le haut pour permettre la mise en place de la sonde sur le banc. Un espace libre est prévu entre les extrémités inférieures des deux parties de la pince pour permettre le passage des pattes de fixation de la sonde sur le chariot lors de son mouvement en translation.

Les pattes de fixation prévues sur la sonde sont donc relativement minces et s'étendent radialement d'un seul côté de celle-ci pour se connecter sur des montants de fixation disposés sur le chariot.

L'axe de la sonde se trouve donc décalé vers le haut par rapport au plan médian horizontal du chariot et donc au plan médian des rails de guidage de celui-ci.

On a découvert que cette disposition, si elle peut convenir lorsque les efforts de pénétration de la sonde sont faibles, présente en revanche de sérieux inconvénients dès lors que la résistance à la pénétration devient importante.

D'autre part, les bras de guidage sont situés à demeure au-dessus de la sonde et sont gênants lors de la mise en place de celle-ci sur le banc. De plus les pinces n'enserrent la sonde que latéralement en deux points diamétralement opposés de ladite sonde et donc sans former de butée au-dessus de celle-ci, alors que le flambement a plutôt tendance à la faire fléchir vers le haut, et donc à la coincer entre les deux parties desdites pinces.

Pour faciliter la compréhension de l'importance des problèmes posés, il est rappelé que dans le cas d'une sonde de diamètre 90 mm, l'effort de pénétration au coeur d'un haut-fourneau peut atteindre 80 KN et pour une sonde de carottage de diamètre 300 mm, l'effort avoisine 250 KN.

Un but de la présente invention est de résoudre les différents problèmes précités.

Un autre but est de proposer un banc d'introduction d'une sonde dans un four, tel qu'un haut-fourneau, qui permette de réduire les contraintes créées dans un tel banc par l'application d'un effort de compression important sur l'extrémité d'une sonde de faible diamètre et de grande longueur.

Un autre but encore est de proposer un banc dont la mise en oeuvre soit aisée tant du point de vue de la préparation que de la conduite de l'opération de sondage.

Pour atteindre ces différents buts il est proposé un dispositif de sondage par les tuyères d'un haut fourneau au moyen d'une sonde allongée rectiligne introduite dans ledit haut fourneau par une tuyère selon une direction parallèle à son axe comportant :

- ladite sonde
- un banc de support et de guidage de la sonde, lié à un châssis fixé sur le blindage du haut fourneau à proximité de ladite tuyère, et portant deux rails de guidage longitudinaux parallèles à l'axe de la sonde
- des moyens d'entraînement destinés à faire pénétrer la sonde dans le haut fourneau et comportant un chariot guidé et entraîné en translation entre lesdits rails
- des moyens de support et de guidage de la sonde.

Selon l'invention, ce dispositif est caractérisé en ce que ledit chariot comprend un berceau formé d'un ou plusieurs étriers d'entraînement prévus pour enserrer la sonde et lui transmettre, dans l'axe de celle-ci, l'effort de poussée pour la pénétration, ladite sonde étant à cet effet pourvue vers son extrémité arrière de collerettes d'entraînement en translation, perpendiculaires à l'axe de la sonde et prévues pour s'appuyer sur les faces avant ou arrière des étriers du chariot et en ce que lesdits moyens de support et de guidage comprennent des bras escamotables portant des organes de support et de guidage répartis sur le pourtour de la sonde, le mouvement des bras étant commandé en fonction de la position du chariot sur le banc et de la direction de son déplacement.

L'avantage principal du dispositif selon l'invention est que l'effort de poussée est transmis par des moyens d'entraînement à la sonde dans l'axe de celle-ci et de ce fait les contraintes susceptibles d'accentuer le flambement de ladite sonde sont fortement réduites, de même que les efforts tendant à fléchir le banc.

Un autre avantage est que le chariot qui constitue lesdits moyens d'entraînement n'a pas tendance à se cambrer et donc n'exerce pas d'efforts parasites sur les glissières perpendiculairement à celles-ci.

Un autre avantage encore est que, les causes de flambement étant réduites, les moyens de support et de guidage de la sonde sont moins sollicités et supportent moins de contraintes.

Selon une autre caractéristique de l'invention lesdits moyens de support et de guidage de la sonde peuvent s'escamoter hors de la zone de passage du chariot. De ce fait, ils soutiennent et guident la sonde en amont du chariot et en s'escamotant libèrent totalement le passage de celui-ci lorsqu'il avance vers le four. Les moyens de liaison de la sonde au chariot peuvent alors être largement dimensionnés ce qui contribue à la rigidité et à la résistance desdits moyens de liaison.

Pour maintenir parfaitement la sonde chaque moyen de support et de guidage comporte trois organes de support et de guidage, l'un étant placé sous la sonde et les deux autres symétriquement de chaque côté et au dessus de celle-ci, de façon que lesdits organes de guidage soient répartis sur le pourtour de la sonde.

Selon une disposition particulière de l'invention, l'organe de support inférieur est porté par un bras escamotable et les deux organes de support et guidage supérieurs sont portés par des leviers articulés sur le bras escamotable. De cette façon, les organes supérieurs peuvent s'écarter de la sonde et s'éloigner l'un de l'autre pour permettre l'escamotage, vers le dessous du banc, du bras, des leviers et des organes de guidage qu'ils portent.

D'autres caractéristiques et avantages apparaîtront lors de la description qui va être faite d'un mode de réalisation préféré d'un banc et d'une sonde associée conformément à l'invention.

On se reportera aux dessins annexés dans lesquels :

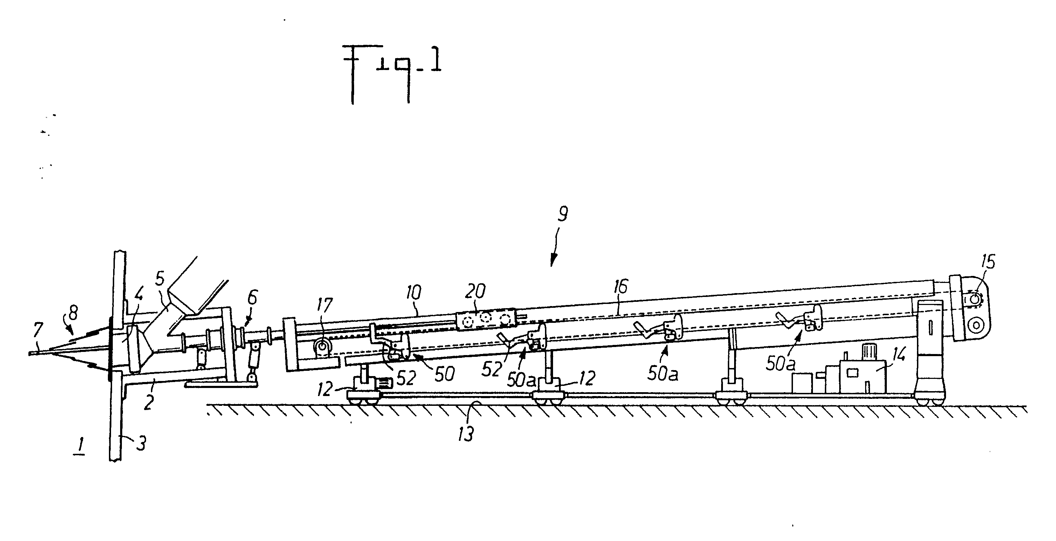

. la figure 1 est une vue générale d'un banc d'introduction d'une sonde dans un haut-fourneau,

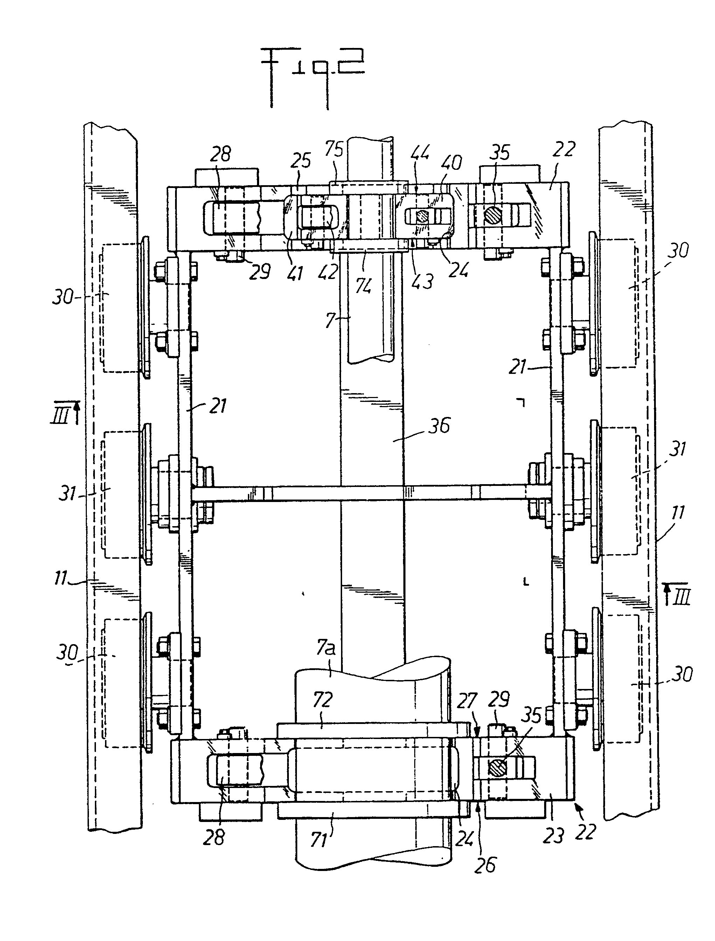

. la figure 2 est une vue de dessus du chariot porte-sonde avec l'extrémité arrière de la sonde, montrant les moyens de liaison de la sonde au chariot,

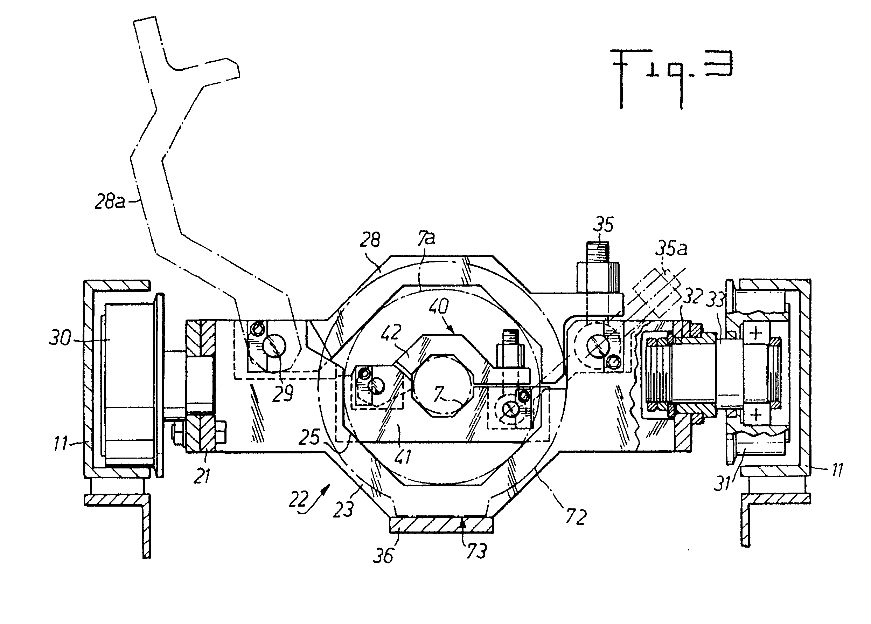

. la figure 3 est une vue en demi-coupe selon la ligne III-III de la figure 2 du chariot, selon l'axe de la sonde,

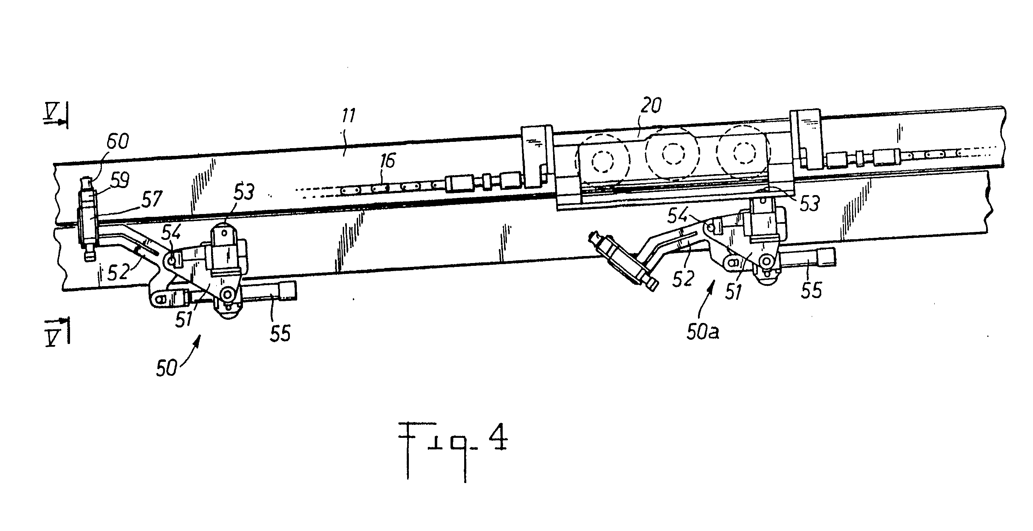

. la figure 4 est une vue latérale partielle du banc montrant les bras de support et de guidage de la sonde,

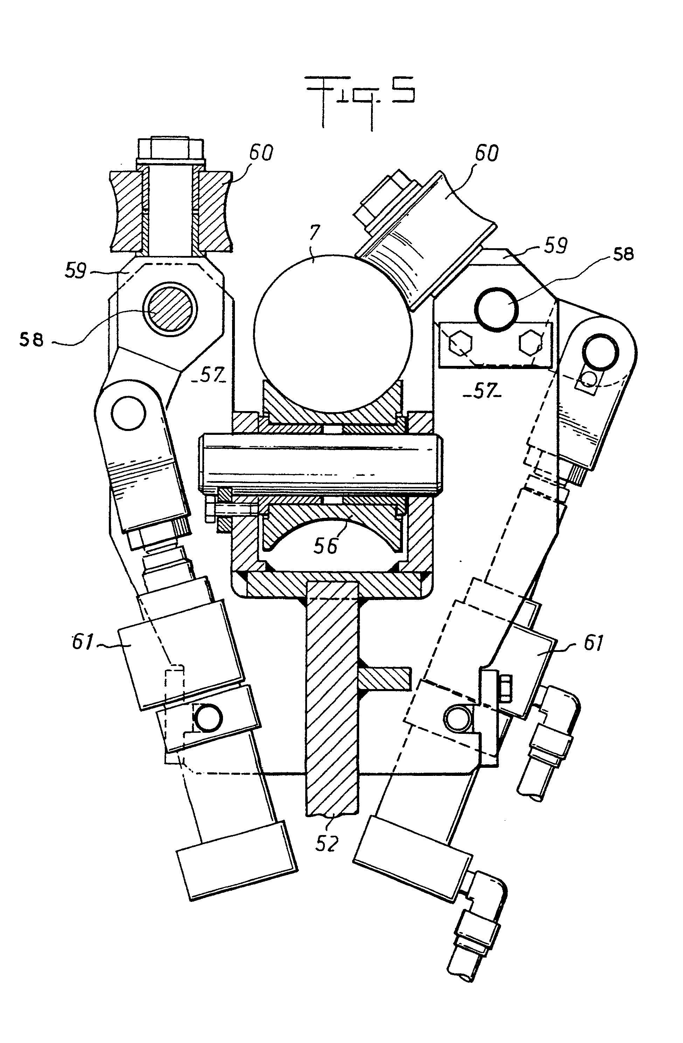

. la figure 5 est une vue de détail de l'extrémité des bras, selon la ligne V-V de la figure 4.

Le dessin de la figure 1 représente l'ensemble d'un dispositif de sondage dans un haut-fourneau 1. Ce dispositif comporte des moyens de guidage et d'étanchéïté constitués d'un châssis 2 fixé sur le blindage 3 du haut-fourneau 1 à proximité d'une tuyère 4 d'injection de vent dans le haut fourneau, ledit vent étant amené dans la tuyère 4 par une descente de vent 5. Le châssis 2 porte des organes de guidage et d'étanchéïté 6, reliés à l'extrémité extérieure de la tuyère 4, lesdits organes permettant le passage d'une sonde 7 lorsque celle-ci est introduite à l'intérieur du haut fourneau par l'orifice 8 de la tuyère 4.

Le banc 9 d'introduction de la sonde 7 comporte un châssis 10 comprenant deux rails de guidage 11, de section en U dont les intérieurs se font face, formant un chemin de roulement pour le chariot porte sonde 20. Le châssis 10 du banc est relié au châssis 2 portant les organes de guidage et d'étanchéïté 6, par des systèmes réglables et démontables non représentés qui transmettent les efforts subis par le banc au châssis 2 et donc au blindage 3 du haut fourneau. Le châssis 10 est par ailleurs supporté par des chariots 12 de hauteur réglable pouvant se déplacer sur la plate forme de travail 13.

Le banc 9 comporte aussi une centrale hydraulique 14 fournissant l'énergie au moteur 15 d'entraînement de la chaîne 16 dont les extrémités sont fixées au chariot 20 pour déplacer celui-ci vers le four ou en sens inverse. A cet effet, un renvoi de chaîne 17 est situé à l'exprémité du châssis la plus proche du four.

Le châssis 10 supporte aussi des moyens 50,50a de support et de guidage de la sonde constitués par des bras escamotables sous le châssis 10 pour laisser libre le passage du chariot 20. Sur le dessin de la figure 1 le bras 50 est représenté en position de guidage de la sonde 7, et les bras 50a sont représentés en position escamotée.

Ainsi que cela se voit bien sur cette figure 1, la sonde 7 est fixée sur le chariot 20 de façon à se trouver juste au niveau des axes longitudinaux dudit chariot 20 et des rails 11.

En se reportant aux figures 2 et 3, on va maintenant décrire plus en détail le chariot 20 d'entraînement de la sonde 7 et les moyens de fixation de la sonde 7 sur ledit chariot.

Celui-ci est constitué d'un cadre 21 portant de chaque côté un ensemble de trois galets 30,31 qui s'engagent dans les rails 11. Les deux galets d'extrémités 30 de chaque ensemble situés vers l'avant et vers l'arrière du chariot s'appuient et roulent sur une aile, de préférence l'aile inférieure, du rail 11. La position des axes de ces galets d'extrémité est fixe par rapport au chariot. Les troisièmes galets 31 de chaque ensemble sont situés en position intermédiaire, de préférence à mi distance entre les deux galets 30 d'un même côté du chariot et la position de leurs axes est réglable en hauteur par rapport au chariot de façon à pouvoir les amener au contact de l'autre aile des rails 11, ainsi que cela est représenté sur la partie droite de la figure 3. Le réglage de la position des galets intermédiaires 31 s'effectue grâce à un palier excentrique réglable 32 qui porte l'axe 33 du galet 31.

Cette disposition particulièrement avantageuse permet de supprimer les jeux dans le sens vertical entre chariot 20 et rails 11, et donc de supprimer également, ainsi que cela a été précisé au début de ce mémoire, une cause aggravante du flambement des sondes.

La sonde 7 est soutenue sur le chariot 20 par un berceau formé d'un ou plusieurs étriers. Dans le dispositif représenté à la figure 2 un étrier 22 est disposé à chaque extrémité du chariot 20.

On a représenté dans la partie supérieure de la figure le système de fixation d'une sonde 7 de 90 mm de diamètre, et sur la partie inférieure le système pour une sonde 7a de diamètre 300 mm. Comme on le voit sur les figures 2 et 3, l'étrier 22 est identique quel que soit le diamètre de la sonde et dimensionné de façon à recevoir directement la sonde de plus grand diamètre. Le maintien des sondes de diamètre plus faible est assuré par des étriers intermédiaire 40 qui s'adaptent dans les rainures 24 réalisées dans l'étrier 22 au niveau du logement 25 dudit étrier, prévu pour supporter une sonde de grand diamètre.

L'étrier 22 est en fait constitué d'une poutre formant la base 23 de l'étrier et reliant les deux côtés du cadre 21, et le logement 25 de la sonde 7a de grand diamètre est réalisé dans ladite base 23 de façon que l'axe de ladite sonde se trouve sensiblement à hauteur des axes des galets 30. Ledit logement 25 est en fait un évidement de forme demi cylindrique d'axe parallèle aux rails 11 et situé dans le plan moyen de ceux-ci et à égale distance desdits rails 11. Les faces avant 26 et arrière 27 de la base 23 de l'étrier sont verticales et parallèles et reçoivent l'appui de collerettes 71,72 solidaires de la sonde 7a et écartées d'une distance égale à l'épaisseur de la base 23. De cette façon, la sonde 7a est bloquée axialement sur le chariot et l'effort de pénétration ou de retrait est transmis du chariot à la sonde par l'intermédiaire de l'étrier 22 et des collerettes 71,72. La sonde 7a est également maintenue dans son logement 25 par un chapeau d'étrier 28 articulé sur la base 23 par un axe 29. Ce chapeau présente un évidement similaire ou complémentaire à celui réalisé dans la base 23 pour former le logement 25 de la sonde, de telle sorte que les deux évidements de la base et du chapeau forment un alésage adapté pour recevoir la sonde et la maintenir sans jeu. Ce chapeau 28 se rabat donc au dessus de la sonde 7a entre les collerettes 71,72 et son extrémité opposée à l'articulation 29 est fixée sur la base 23 par un goujon pivotant 35.

Sur la figure 2 les chapeaux 28 ne sont pas représentés entièrement et on ne voit que leurs extrémités articulées sur l'axe 29.

Sur la figure 3 on a également représenté en trait mixte et repéré 28a,35a le chapeau 28 et le goujon articulé 35 dans la position ouverte pour la pose ou la dépose de la sonde. Ainsi qu'on le comprendra aisément, il suffit, pour la mise en place de la sonde, de placer celle-ci au dessus de l'étrier 22 après avoir relevé et basculé le chapeau 28 puis de la laisser descendre dans son logement 25 ou elle se centrera automatiquement. Il est également prévu qu'au moins une des collerettes de la sonde comporte un méplat 73 qui, en venant au contact d'une plaque inférieure 36 du berceau reliant les étriers 22, immobilise en rotation la sonde.

A la partie supérieure de la figure 2, on a représenté un système de fixation d'une sonde de petit diamètre. Ce système consiste en un étrier intermédiaire amovible 40 comprenant lui aussi une base 41 et un chapeau 42 lié à la base 41 de la même façon que pour l'étrier principal 22. Cet étrier intermédiaire 40 se glisse verticalement dans les rainures 24 réalisées de chaque côté du logement 25 dans la base 23 de l'étrier 22. Tout comme pour la sonde de gros diamètre, l'entraînement de la sonde 7 de petit diamètre est réalisé par des collerettes 74,75 liées à celles-ci et s'appuyant sur les faces 43 ou 44 de l'étrier intermédiaire 40.

On peut également prévoir pour une petite sonde des collerettes de plus grand diamètre et d'écartement relatif approprié, qui portent alors sur les faces 26 et 27 de l'étrier 22. Cette disposition présente l'avantage de transmettre les efforts de pénétration ou de retrait directement du chariot à la sonde. Cependant elle entraîne un encombrement plus important de ladite sonde.

D'autre part, on remarquera un avantage particulièrement intéressant du système à étrier intermédiaire amovible en ce qu'il permet de fixer facilement sur le même chariot des sondes de diamètres différents en utilisant des étriers intermédiaires adaptés aux différentes sondes. Bien évidemment, ces étriers seront réalisés de façon à conserver toujours la même position pour l'axe de la sonde.

Les figures 4 et 5 montrent la disposition et la constitution des moyens 50,50a de guidage et de soutien de la sonde. Chacun de ceux-ci est constitué d'un support 51 fixé sur le châssis 10 du banc en dessous des rails 11, et d'un bras escamotable 52. Le support 51 porte également des rouleaux 53 destinés à soutenir la chaîne 16 d'entraînement du chariot 20. Le bras escamotable 52 est articulé sur le support 51 et pivote autour de l'axe d'articulation 54 de façon que son extrémité servant au guidage et au soutien de la sonde puisse s'escamoter totalement en dessous de la zone de passage du chariot 20, lorsque ledit bras se trouve en position basse, et que ladite extrémité se trouve au niveau de la sonde lorsque le bras est en position haute. Le moyen de commande du bras 52 est un vérin 55 dont le corps est lié au support 51, et dont l'extrémité de la tige est articulée sur ledit bras 52. L'extrémité de celui-ci porte un galet de soutien 56 monté libre en rotation autour d'un axe horizontal situé dans un plan perpendiculaire à l'axe de la sonde et qui se positionne sous la sonde lorsque le bras 52 est relevé et la supporte pour éviter son fléchissement vers le bas. L'extrémité du bras 52 est en forme de fourche à deux branches 57 entre lesquelles le galet de soutien 56 est monté et qui s'étendent de chaque côté de la sonde, le bras 52 étant en position haute, ainsi que représentée sur la figure 5. Chaque branche 57 porte un tourillon 58 sur lesquel s'articule un petit levier 59 qui porte également un galet supérieur 60 qui s'appuie sur la sonde selon une direction inclinée d'environ 30 à 45° par rapport à la verticale lorsque ledit levier 51 est commandé pour se mettre en position de guidage, et qui se relève en position telle que son axe soit sensiblement vertical lorsque ledit levier 59 est commandé pour se mettre en position de dégagement soit lors de la pose ou dépose de la sonde, soit pour permettre l'escamotage du bras 52 vers le bas. Pour ce faire, chacun de deux leviers 59 d'un bras 52 est commandé par un vérin 61 articulé d'une part sur l'extrémité du bras 52 à proximité de la fourche 57, et d'autre part sur les extrémités dudit levier 59 opposées aux galets 60.

Bien évidemment les axes des galets supérieurs 60 se trouvent dans le même plan, perpendiculaire à l'axe de la sonde, que l'axe du galet de soutien 56, ou au moins dans un plan parallèle et proche de celui-ci.

On comprendra également que lorsque les deux galets supérieurs 60 se trouvent dans leur position de dégagement, après avoir pivoté vers le haut en s'éloignant de la sonde, l'espace libre entre lesdits galets 60 doit être suffisant pour laisser passer la sonde de diamètre choisi lorsque le levier 52 pivote vers le bas pour s'escamoter.

De préférence, la surface latérale des galets 56,60 est concave de rayon égal au rayon de la sonde pour être en contact avec celle-ci sur une partie maximale de sa circonférence.

On va maintenant décrire la sucession des opérations de mise en place de la sonde sur le banc et d'introduction de celle-ci dans le four.

Avant la mise en place de la sonde le chariot 20 est reculé vers l'arrière du banc c'est à dire à l'extrémité de celui-ci du côté opposé au haut fourneau. Les chapeaux 28,42 des étriers sont relevés et les bras 52 sont placés en position haute de soutien de la sonde. Par contre les leviers 59 restent dans leur position de repos, c'est-à-dire que les galets supérieurs 60 sont écartés. La sonde est alors amenée au dessus du banc puis on la laisse descendre jusqu'à ce qu'elle repose d'une part sur les galets 56 des bras 52 et d'autre part dans les logements 25 des étriers. Bien entendu la sonde est positionnée axialement de façon que les collerettes 71,72,74,75 soient respectivement placées de part et d'autre des étriers. On veillera également à ce que les moyens d'arrêt en rotation de la sonde soient correctement orientés.

On remarquera que grâce à la forme des bases 23,41 des étriers et grâce à la forme concave des galets de soutien 56, la sonde se positionne automatiquement selon l'axe d'introduction désiré.

Les chapeaux 28,42 des étriers sont alors rabattus et serrés pour maintenir la sonde sur le chariot 20, et les leviers 59 sont actionnés de façon que les galets supérieurs 60 viennent en appui sur la sonde. On remarquera encore que grâce à la disposition particulière desdits galets de soutien 56 et supérieurs 60, la sonde est fermement maintenue sur les bras 52 et que d'éventuels efforts tendant à soulever celle-ci sont efficacement contrés par les galets supérieurs 60 du fait de leur positionnement au dessus de ladite sonde.

Le banc de sondage est alors prêt pour commencer l'introduction de la sonde. Le moteur 15 est alors mis en service et assure une traction sur la chaîne 16 qui grâce au renvoi 17 tire le chariot 20 en direction du four. Les bras 52 et les leviers 59 conservent leur position de maintien de la sonde tant qu'ils se trouvent en amont du chariot 20. Lorsque ledit chariot 20 arrive à proximité d'un bras, un détecteur de position du chariot provoque dans un premier temps l'écartement des galets 60 par pivotement des leviers 59, puis l'escamotage du bras 52 vers le bas pour libérer le passage du chariot 20. Il en va de même lorsque le chariot arrive à proximité de chacun des moyens de guidage de la sonde. De cette façon, la sonde est en permanence maintenue entre l'extrémité avant du banc et le chariot. Ces moyens de guidage étant disposés régulièrement et suffisamment proche l'une de l'autre sur toute la longueur du banc, la sonde ne peut ni fléchir ni flamber lorsque l'effort de pénétration devient important.

Lors du retrait de la sonde, le processus inverse se réalise, de telle sorte que la sonde est toujours maintenue suivant l'axe d'introduction.

Bien entendu l'invention n'est pas limitée du mode de réalisation décrit ci-dessus. En particulier, les divers moyens de guidage, de réglage, de serrage et de commande des différents organes pourront subir des modifications d'ordre constructif sans pour autant sortir du cadre de l'invention.

## Revendications

1. Dispositif de sondage par les tuyères d'un haut fourneau (1) au moyen d'une sonde allongée rectiligne (7) introduite dans ledit haut fourneau par une tuyère (4) selon une direction parallèle à son axe comportant :
   - ladite sonde
   - un banc (9) de support et de guidage de la sonde, lié à un châssis (2) fixé sur le blindage (3) du haut fourneau à proximité de ladite tuyère, et portant deux rails de guidage (11) longitudinaux parallèles à l'axe de la sonde
   - des moyens d'entraînement destinés à faire pénétrer la sonde dans le haut fourneau et comportant un chariot (20) guidé et entraîné en translation entre lesdits rails
   - des moyens (50,50a) de support et de guidage de la sonde,
   
   dispositif caractérisé en ce que ledit chariot comprend un berceau formé d'un ou plusieurs étriers (22) d'entraînement prévus pour enserrer la sonde et lui transmettre, dans l'axe de celle-ci l'effort de poussée pour la pénétration, ladite sonde étant à cet effet pourvue vers son extrémité arrière de collerettes (71,72,74,75) d'entraînement en translation, perpendiculaires à l'axe de la sonde et prévues pour s'appuyer sur les faces avant ou arrière des étriers du chariot, et en ce que lesdits moyens de support et de guidage comprennent des bras escamotables (52) portant des organes de support et de guidage (56,60) répartis sur le pourtour de la sonde, le mouvement des bras étant commandé en fonction de la position du chariot sur le banc et de la direction de son déplacement.

2. Dispositif selon la revendication 1, caractérisé en ce que chaque étrier comporte une base (23) liée au chariot et pourvue d'un évidement (25) de forme demi-cylindrique d'axe parallèle aux rails, et un chapeau (28) présentant un évidement similaire à celui de la base et pouvant être fixé sur celle-ci de façon que les deux évidements forment un alésage adapté pour recevoir la sonde.

3. Dispositif selon la revendication 1; caractérisé en ce que les rails sont constitués de deux profilés en U dont les intérieurs se font face et en ce que le chariot comporte deux ensembles de trois galets (30,31), deux (30) de ces galets portant contre une aile d'un rail à l'intérieur de celui-ci, et le troisième placé en position intermédiaire étant réglable en position par un excentrique (32) de façon à porter sur l'autre aile du rail.

4. Dispositif selon la revendication 1, caractérisé en ce que chacun des moyens de support et de guidage de la sonde comporte trois organes de support et de guidage (56,60) répartis sur le pourtour de la sonde, l'un (56) étant placé sous la sonde, et les deux autres (60) symétriquement de chaque côté et au-dessus.

5. Dispositif selon la revendication 4, caractérisé en ce que les organes de support et de guidage sont des galets.

6. Dispositif selon la revendication 4, caractérisé en ce que l'organe de support inférieur (56) est porté par le bras escamotable (52) et les deux organes de support et de guidage supérieurs (60) sont portés par des leviers (59) articulés sur le bras escamotable.

7. Dispositif selon la revendication 4, caractérisé en ce que les bras (52) et leviers (59) sont actionnés par des vérins (55,61) et en ce que le mouvement des bras et leviers est commandé en fonction de la position et de la direction du déplacement du chariot sur le banc.

8. Dispositif selon la revendication 1, caractérisé en ce qu'une au moins des collerettes (71,72,74,75) de la sonde comporte un moyen (73) d'immobilisation en rotation de la sonde sur le chariot.

9. Sonde de sondage par une tuyère d'un haut fourneau au moyen d'un dispositif de sondage comportant un banc (9) de support et de guidage de la sonde (7) portant deux rails (11) de guidage longitudinaux parallèles à l'axe de la sonde, des moyens d'entraînement destinés à faire pénétrer la sonde dans le haut fourneau et comportant un chariot (20) guidé et entraîné en translation entre lesdits rails, ledit chariot comprenant un berceau formé d'un ou plusieurs étriers (22) d'entraînement prévus pour enserrer la sonde et lui transmettre, dans l'axe de celle-ci, l'effort de poussée pour la pénétration, sonde caractérisée en ce que, à cet effet, elle est pourvue vers son extrémité arrière de collerettes (71,72,74,75) d'entraînement en translation, perpendiculaires à l'axe de la sonde et prévues pour s'appuyer sur les faces avant et arrière des étriers du chariot.

## Claims

1. Device for probing via the blast pipes of a blast furnace (1) using an extended rectilinear probe (7) inserted into the said blast furnace via a blast pipe (4) in a direction parallel to its axis, comprising:
   - the said probe
   - a stand (9) for supporting and guiding the probe connected to a frame (2) fixed to the shielding (3) of the blast furnace in the vicinity of the said blast pipe and carrying two longitudinal guide rails (11) parallel to the axis of the probe
   - drive means intended to cause the probe to penetrate into the blast furnace and comprising a slide (20) guided and driven in translation between the said rails
   - means (50, 50a) for supporting and guiding the probe,
   the device being characterised in that the said slide comprises a cradle formed from one or more drive yokes (22) provided in order to grip the probe and to transmit to it, in the axis of the latter, the thrust force for penetration, the said probe being, to this end, provided towards its rear end with collars (71, 72, 74, 75) for driving in translation, perpendicular to the axis of the probe and provided in order to bear on the front or rear faces of the yokes of the slide, and in that the said support and guide means comprise retractable arms (52) carrying support and guide members (56, 60) distributed over the periphery of the probe, the movement of the arms being controlled as a function of the position of the slide on the stand and the direction of its displacement.

2. Device according to Claim 1, characterised in that each yoke comprises a base (23) connected to the slide and provided with a recess (25) of semi-cylindrical form with an axis parallel to the rails, and a cap (28) having a recess similar to that of the base and capable of being fixed on the latter so that the two recesses form a bore adapted in order to receive the probe.

3. Device according to Claim 1, characterised in that the rails consist of two U profiles whose insides are opposite one another and in that the slide comprises two sets of three rollers (30, 31), two (30) of these rollers bearing against a flange of a rail inside the latter, and the third placed in an intermediate position, which position can be adjusted by a cam (32) so as to bear on the other flange of the rail.

4. Device according to Claim 1, characterised in that each of the means for supporting and guiding the probe comprises three support and guide members (56, 60) distributed over the periphery of the probe, one (56) being placed beneath the probe and the other two (60) being placed symmetrically on either side and above.

5. Device according to Claim 4, characterised in that the support and guide members are rollers.

6. Device according to Claim 4, characterised in that the lower support member (56) is carried by the retractable arm (52) and the two upper support and guide members (60) are carried by levers (59) articulated on the retractable arm.

7. Device according to Claim 4, characterised in that the arms (52) and levers (59) are actuated by jacks (55, 61) and in that the movement of the arms and levers is controlled as a function of the position and of the direction of displacement of the slide on the stand.

8. Device according to Claim 1, characterised in that at least one of the collars (71, 72, 74, 75) of the probe comprises a means (73) for immobilising the probe in terms of rotation on the slide.

9. Probe for probing via a blast pipe of a blast furnace by means of a probing device comprising a stand (9) for supporting and guiding the probe (7), carrying two longitudinal guide rails (11) parallel to the axis of the probe, drive means intended to cause the probe to penetrate into the blast furnace and comprising a slide (20) guided and driven in translation between the said rails, the said slide comprising a cradle formed from one or more drive yokes (22) provided in order to grip the probe and transmit to it, in the axis of the latter, the thrust force for penetration, which probe is characterised in that, to this end, it is provided towards its rear end with collars (71, 72, 74, 75) for driving in translation, perpendicular to the axis of the probe and provided in order to bear on the front and rear faces of the yokes of the slide.

**Ansprüche**

1. Vorrichtung zum Sondieren über die Blasdüsen eines Hochofens (1) mit Hilfe einer geradlinigen länglichen Sonde (7), welche über eine Blasdüse (4) in parallel zu ihrer Achse verlaufender Richtung in den Hochofen eingeführt wird, mit
   - besagter Sonde
   - einer Bank (9) zum Tragen und Führen der Sonde, welche Bank mit einem an der Panzerung (3) des Hochofens nahe der Blasdüse befestigten Gestell (2) verbunden ist und zwei längliche Führungsschienen (11) trägt, die zur Achse der Sonde parallel sind,
   - Antriebseinrichtungen, die dazu bestimmt sind, die Sonde in den Hochofen einfahren zu lassen, und die einen geführten und zur Verschiebung zwischen diesen Schienen angetriebenen Wagen (20) aufweisen,
   - Trag- und Führungseinrichtungen (50,50a) für die Sonde, welche Vorrichtung dadurch gekennzeichnet ist, dass der Wagen einen aus einem oder mehreren, zum Einspannen der Sonde und zum Übertragen der Stosskraft zum Eindringen auf ihre Achse vorgesehenen Antreibbügeln (22) gebildeten Tragsattel aufweist, wogegen die Sonde zu diesem Zwecke gegen ihr hinteres Ende mit Flanschen (71,72,74,75) für den Vorschubantrieb versehen ist, die sich senkrecht zur Sondenachse erstrecken und dazu vorgesehen sind, sich gegen die Vorder- und Hinterflächen der Antreibbügel des Wagens zu legen, und dass die Trag- und Führungseinrichtungen einziehbare Arme (52) aufweisen, die über den Umfang der Sonde verteilte Trag- und Führungsorgane (56,60) tragen, wobei die Bewegung der Arme in Abhängigkeit von der Position des Wagens auf der Bank und der Richtung seiner Verschiebung gesteuert ist.

2. Vorrichtung nach Anspruch 1, dadurch gekennzeichnet, dass jeder Tragsattel eine mit dem Wagen verbundene Basis (23) aufweist, die mit einer halbzylindrischen Ausnehmung (25) einer zu den Schienen parallelen Achse versehen ist, sowie mit einer Abdeckung (28), die eine der der Basis ähnliche Ausnehmung aufweist und an dieser derart befestigbar ist, dass die beiden Ausnehmungen eine Öffnung zur Aufnahme der Sonde bilden.

3. Vorrichtung nach Anspruch 1, dadurch gekennzeichnet, dass die Schienen von zwei U-Profilen gebildet sind, deren Innenseiten einander zugekehrt sind, und dass der Wagen zwei Einheiten von drei Rädern (30,31) besitzt, wovon zwei (30) dieser Räder sich an einem Schenkel einer Schiene in deren Innerem abstützen und das dritte in einer Zwischenposition angeordnet ist, die durch einen Exzenter (32) derart verstellbar ist, dass es sich am anderen Schenkel der Schiene abstützt.

4. Vorrichtung nach Anspruch 1, dadurch gekennzeichnet, dass jede der Trag- und Führungseinrichtungen für die Sonde drei über den Umfang der Sonde verteilte Trag- und Führungsorgane (56,60) aufweist, von denen eines (56) unter der Sonde liegt und die beiden anderen (60) symmetrisch zu beiden Seiten darüber.

5. Vorrichtung nach Anspruch 4, dadurch gekennzeichnet, dass die Trag- und Führungseinrichtungen Rollen sind.

6. Vorrichtung nach Anspruch 4, dadurch gekennzeichnet, dass das untere Tragorgan (56) von dem einziehbaren Arm (52) und die beiden oberen Trag- und Führungsorgane (60) von am einziehbaren Arm angelenkten Hebeln (59) getragen sind.

7. Vorrichtung nach Anspruch 4, dadurch gekennzeichnet, dass die Arme (52) und Hebel (59) von Zylindereinheiten (55,61) betätigt sind, und dass die Bewegung der Arme und Hebel in Abhängigkeit von der Position des Wagens auf der Bank und der Richtung seiner Verschiebung gesteuert ist.

8. Vorrichtung nach Anspruch 1, dadurch gekennzeichnet, dass wenigstens einer der Flansche (71,72,74,75) der Sonde eine Einrichtung (73) zum drehfesten Arretieren der Sonde am Wagen aufweist.

9. Sonde zum Sondieren über eine Blasdüse eines Hochofens mit Hilfe einer Sondierungsvorrichtung, welche eine Trag- und Führungsbank (9) für die Sonde (7) mit zwei länglichen, zur Achse der Sonde parallelen Führungsschienen (11) und Antriebseinrichtungen aufweist, die dazu bestimmt sind, die Sonde in den Hochofen einfahren zu lassen, und die einen geführten und zur Verschiebung zwischen diesen Schienen angetriebenen Wagen (20) besitzen, welcher Wagen einen aus einem oder mehreren, zum Einspannen der Sonde und zum Übertragen der Stosskraft zum Eindringen auf ihre Achse vorgesehenen Antreibbügeln (22) gebildeten Tragsattel aufweist, wobei die Sonde dadurch gekennzeichnet ist, dass sie zu diesem Zwecke gegen ihr hinteres Ende mit Flanschen (71,72,74,75) für den Verschubantrieb versehen ist, die sich senkrecht zur Sondenachse erstrecken und dazu vorgesehen sind, sich gegen die Vorder- oder Hinterflächen der Antreibbügel des Wagens zu legen.

Fig.1

EP 0 269 541 B1

Fig.2

Fig.3

EP 0 269 541 B1

Fig. 4

# Fig. 5